# EUROPEAN PATENT APPLICATION

(11) **EP 4 451 721 A1**
(43) Date of publication of application: **23.10.2024**
(21) Application number: 24171150.6
(22) Date of filing: 18.04.2024
(51) Int. Cl.: H04W 12/088, H04W 12/122, H04W 12/71, H04W 84/12, H04W 88/04, H04W 88/08, H04W 92/20

(54) **TECHNIQUE FOR REMOVING A ROGUE EXTENDER FROM A WIRELESS NETWORK**

(30) Priority: 21.04.2023 US 202318304821
(71) Applicant: Nokia Solutions and Networks Oy, 02610 Espoo (FI)
(72) Inventor: Rajapandiyan, Karthick, 600044 Chennai (IN); Ramasamy, Palaniappan, 600096 Chennai (IN); Nadakuditi, Rahul, Chennai 600100 (IN); N, Arun Sivasankar, 600091 Chennai (IN)

(57) **Abstract**

In a wireless mesh network, e.g., a WiFi network, having a root node and one or more extenders, a rogue extender can be removed from the network by (i) updating the list of authorized extenders stored at the root node to exclude the rogue extender and then (ii) changing the network address of the root node. In that case, the existing extenders will automatically re-initiate their on-boarding processes in which the root node will (1) provide the authorized extenders on the list with its new network address in response to probe requests received from those extenders and (2) ignore probe requests received from the rogue extender, thereby terminating the on-boarding process without providing its new network address to the rogue extender. Depending on the implementation, a remote configuration server can provide the new network address to the root node or the root node can select its own new network address.

## Description

### BACKGROUND

### Field of the Disclosure

The present disclosure relates to wireless networks, and, more specifically but not exclusively, to WiFi mesh networks having a root node and one or more extenders.

### Description of the Related Art

This section introduces aspects that may help facilitate a better understanding of the disclosure. Accordingly, the statements of this section are to be read in this light and are not to be understood as admissions about what is prior art or what is not prior art.

A conventional WiFi mesh network may have a root node and one or more extenders that communicate wirelessly with the root node either directly or via one or more other extenders in the mesh network. The root node also communicates (e.g., wirelessly or via cable, depending on the implementation) with a remote configuration server that can control the configuration of the root node. The root node and each extender can each communicate wirelessly with one or more WiFi clients (aka WiFi devices, mesh clients, mesh devices), such as laptops, cell phones, tablets, printers, etc. The wireless communications between the root node and the one or more extenders is referred to herein as backhaul communications, while the wireless communications between (i) the root node and the extenders and (ii) the WiFi clients is referred to herein as fronthaul communications.

If the user of a WiFi client that communicates with the mesh network via a particular extender fails to comply with the requirements for such communications (e.g., fails to pay service fees for those communications), it may become desirable to prevent that user from accessing the network by removing that so-called rogue extender from the network.

### SUMMARY

In certain embodiments, the present disclosure is a method for operating a wireless network comprising a root node and one or more existing extenders configured to communicate with the root node, wherein the root node has (i) a list of authorized extenders and (ii) a network address. The method comprises updating, at the root node, the list of authorized extenders to exclude an existing extender and causing the network address of the root node to be changed.

In at least some of the above embodiments, a configuration server for the wireless network performs the method.

In at least some of the above embodiments, the configuration server provides a new network address to the root node.

In at least some of the above embodiments, the configuration server instructs the root node to select a new network address for the root node.

In certain embodiments, the present disclosure is a configuration server for a wireless network comprising a root node and one or more existing extenders configured to communicate with the root node, wherein the root node has (i) a list of authorized extenders and (ii) a network address. The configuration server comprises at least one processor and at least one memory storing instructions that, upon being executed by the at least one processor, cause the configuration server at least to update, at the root node, the list of authorized extenders to exclude an existing extender and cause the network address of the root node to be changed.

In at least some of the above embodiments, the configuration server is configured to provide a new network address to the root node.

In at least some of the above embodiments, the configuration server is configured to instruct the root node to select a new network address for the root node.

In certain embodiments, the present disclosure is a method for a wireless network comprising a root node and one or more existing extenders configured to communicate with the root node, wherein the root node has (i) a list of authorized extenders and (ii) a network address. The method comprises the list of authorized extenders being updated to exclude an existing extender and the network address of the root node being changed to a new network address. For an extender on the updated list of authorized extenders, the extender transmits an on-boarding probe request to the root node; the root node determines that the extender is on the list and transmits, to the extender, an on-boarding probe reply containing the root node's new network address; and the extender communicates with the root node using the new network address. For the excluded extender, the excluded extender transmits an on-boarding probe request to the root node; the root node determines that the excluded extender is not on the list; and the root node terminates the on-boarding process without transmitting a probe reply containing the root node's new network address to the excluded extender.

In at least some of the above embodiments, the root node receives the new network address.

In at least some of the above embodiments, the root node selects the new network address.

In certain embodiments, the present disclosure is a root node for a wireless network further comprising one or more existing extenders configured to communicate with the root node, wherein the root node has (i) a list of authorized extenders and (ii) a network address. The root node comprises at least one processor and at least one memory storing instructions that, upon being executed by the at least one processor, cause the root node at least to store an updated list of authorized extenders that excludes an existing extender of the one or more existing extenders; receive an instruction to change the network address of the root node; and change the network address of the root node. For an extender on the updated list of authorized extenders, the root node receives an on-boarding probe request from the extender; determines that the extender is on the list and transmit, to the extender, an on-boarding probe reply containing the root node's new network address; and communicates with the extender using the new network address. For the excluded extender, the root node receives an on-boarding probe request from the excluded extender; determines that the excluded extender is not on the list; and terminates the on-boarding process without transmitting a probe reply containing the root node's new network address to the excluded extender.

### BRIEF DESCRIPTION OF THE DRAWINGS

Embodiments of the disclosure will become more fully apparent from the following detailed description, the appended claims, and the accompanying drawings in which like reference numerals identify similar or identical elements.
FIG. 1 is a simplified block diagram of a WiFi mesh network according to certain embodiments of the present disclosure;
FIG. 2 is a flow diagram representing the processing by an example embodiment of the present disclosure; and
FIG. 3 is a simplified hardware block diagram of an example node that can be used to implement any of the nodes of FIG. 1.

### DETAILED DESCRIPTION

Detailed illustrative embodiments of the present disclosure are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of example embodiments of the disclosure.

As used herein, the singular forms "a," "an," and "the," are intended to include the plural forms as well, unless the context clearly indicates otherwise. It further will be understood that the terms "comprises," "comprising," "contains," "containing," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functions/acts involved.

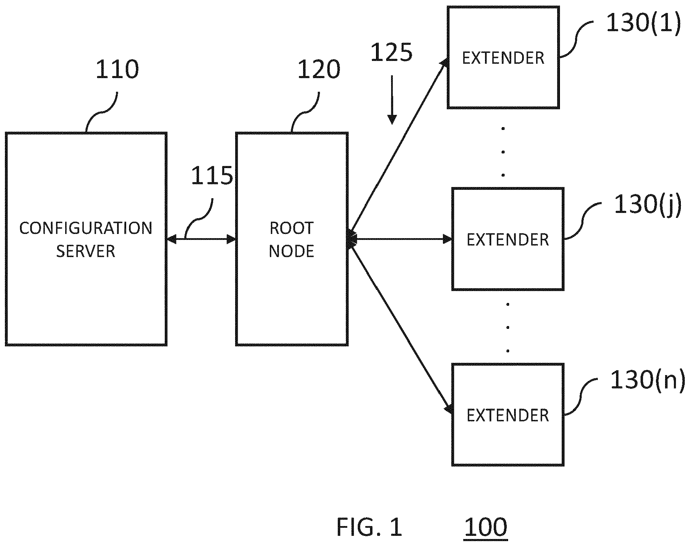

FIG. 1 is a simplified block diagram of a WiFi mesh network 100 according to certain embodiments of the present disclosure. As shown in FIG. 1, WiFi mesh network 100 has a root node 120 that communicates with *N* different extenders 130(1)-130(*N*) via wireless communication backhaul 125. In addition, the root node 120 communicates with remote configuration server 110 via wide area network (WAN) link 115. Although not shown in FIG. 1, the root node 120 and each extender 130 may each communicate with one or more WiFi clients via the network's wireless communication fronthaul.

When the WiFi mesh network 100 is initially provisioned, the configuration server 110 transmits to the root node 120 a list containing the unique serial numbers of extenders that are authorized to join the network. The root node 120 is also configured with a unique Basic Service Set Identifier (BSSID) Medium Access Control (MAC) address, either in the factory or by the configuration server 110, depending on the implementation.

When each extender 130 is initially powered up, an on-boarding process is performed in which the extender 130 broadcasts an (upstream) probe request containing its serial number and other MAC information. Upon receiving the probe request, the root node 120 compares the serial number in the probe request to its list of serial numbers to determine whether the extender 130 is an authorized extender. If not, then the root node 120 ignores the probe request. If, however, the extender 130 is an authorized extender, then the root node 120 transmits to the extender 130 a (downstream) probe reply with details about the backhaul 125, such as the BSSID MAC address of the root node 120. After the completion of the on-boarding process, with the BSSID MAC address of the root node 120, the extender 130 can then communicate with the root node 120 via the backhaul 125. Fronthaul communications can then start between the extender 130 and one or more connected WiFi clients.

After the WiFi mesh network 100 has been established, if a new extender 130 is to be added, then the configuration server 110 updates the list of authorized extenders at the root node 120 to include the serial number of the new extender 130. Then, when the new extender 130 is powered up, the above-described on-boarding process can be performed to enable the new extender 130 to communicate with the root node 120 via the backhaul 125.

In some existing WiFi technologies, when the root node 120 is reset (e.g., either power cycled (i.e., turned off and then back on) or factory reset), the root node 120 retains its BSSID MAC address. This enables the root node 120 and the extenders 130 to resume communications after a reset without having to repeat the on-boarding process.

As suggested in the Background section, there are situations when it becomes desirable to remove a so-called rogue extender from a mesh network. For example, at some point in time, the configuration server 110 may designate existing extender 130(j) as a rogue extender to be removed from the WiFi mesh network 100 of FIG. 1. Depending on the implementation, the configuration server 110 may independently determine that the extender 130(j) is a rogue extender or the configuration server 110 may receive that determination, e.g., from a human network administrator.

In either case, according to some possible implementations of the present disclosure, the configuration server 110 updates the list of acceptable extenders stored at the root node 120 to exclude the serial number of the rogue extender 130(j). The configuration server 110 will then reconfigure the root node 120 to have a different BSSID MAC address. From that point in time, if an extender 130, including the rogue extender 130(j), transmits an upstream backhaul message to the root node 120 using the previous BSSID MAC address, then the root node 120 will ignore that message, since the root node's new BSSID MAC address will now be different from the BSSID MAC address in that upstream backhaul message. Furthermore, any downstream backhaul messages transmitted by the root node 120 will have the root node's new BSSID MAC address, and each extender 130, including the rogue extender 130(j), will ignore those downstream messages.

Failing to continue to communicate with the root node 120, each extender 130, including the rogue extender 130(j), will re-initiate the on-boarding process. For each extender 130 on the updated list of authorized extenders at the root node 120, the on-boarding process will be successful with the authorized extender 130 receiving the root node's new BSSID MAC address. For the rogue extender 130(j), however, the root node 120 will determine that the serial number of the rogue extender is not on its updated list of authorized extenders and will not provide its new BSSID MAC address to the rogue extender 130(j). In this way, the rogue extender 130(j) is removed from the WiFi mesh network 100 and prevented from subsequently communicating with the root node 120 via the backhaul 125.

In some other possible implementations of the present disclosure, the configuration server 110 instructs the root node 120 to change its BSSID MAC address, where the root node 120 is responsible for selecting the new value for its BSSID MAC address. The rest of the processing is the same as that already described with the same result of removing the rogue extender 130(j) from the WiFi mesh network 100.

Note that the updating of the list of authorized extenders and the change in the BSSID MAC address of the root node 120 may be, but do not have to be, part of a factory reset of the root node 120 by the configuration server 110. For example, the list of authorized extenders can be updated by a manual firmware/software update in the root node 120 without using the configuration server 110, and the change in the BSSID MAC address can be triggered after powering up the root node 120 with the new firmware/software update.

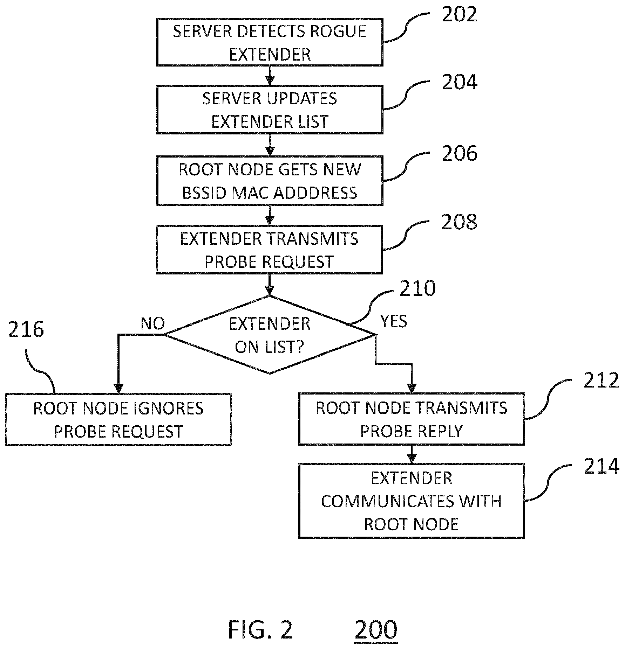

FIG. 2 is a flow diagram 200 representing the processing by an example embodiment of the present disclosure. In step 202, the configuration server 110 determines that an existing extender 130(j) is a rogue extender. In step 204, the configuration server 110 updates the root node's list of authorized extenders to exclude the rogue extender 130(j). In step 206, the configuration server 110 causes the root node 120 to have a new BSSID MAC address. Depending on the particular implementation, step 206 involves either (i) the configuration server 110 providing the new BSSID MAC address to the root node 120 or (ii) the configuration server 110 instructing the root node 120 to select its new BSSID MAC address. In either case, at that point in time, backhaul communications between the root node 120 and all extenders 130 cease.

In step 208, an extender 130 re-initiates the on-boarding process by transmitting a probe request. In step 210, the root node 120 determines whether the serial number of the extender 130 is on its list of authorized extenders. If so, then, in step 212, the root node 120 transmits a probe reply with its new BSSID MAC address to the extender 130 and, in step 214, the extender 130 resumes backhaul communications with the root node 120. If, however, the root node 120 determines that the serial number of the extender 130 is not on its list of authorized extenders, then, in step 216, the root node 120 ignores the extender's probe request and the extender 130 will no longer be able to communicate with the root node 120 via the backhaul 125.

The processing of steps 208-216 is performed for each extender 130 with steps 212 and 214 being performed for each authorized extender and step 216 being performed for each rogue extender.

The configuration server 110 provides the new BSSID MAC address to the root node 120, or the configuration server 110 instructs the root node 120 to select its new BSSID MAC address. In either case, the present disclosure should be able to be implemented using legacy extenders that are configured to re-initiate the on-boarding process after detecting a cessation of backhaul communications with the root node.

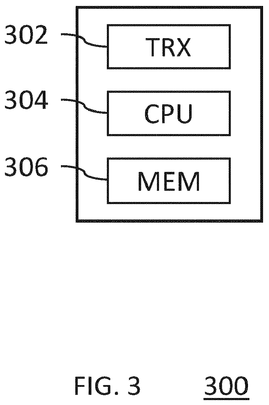

FIG. 3 is a simplified hardware block diagram of an example node 300 that can be used to implement any of the nodes 110, 120, or 130 of FIG. 1. As shown in FIG. 3, the node 300 includes (i) communication hardware (e.g., wireless, wireline, and/or optical transceivers (TRX)) 302 that supports communications with other nodes, (ii) a processor (e.g., CPU microprocessor) 304 that controls the operations of the node 300, and (iii) a memory (e.g., RAM, ROM) 306 that stores code executed by the processor 304 and/or data generated and/or received by the node 300.

Although the present disclosure has been described in the context of WiFi mesh network 100 of FIG. 1, in which each extender 130 communicates directly with the root node 120 via the backhaul 125, those skilled in the art will understand that one or more extenders in a multi-layer mesh network may have indirect backhaul communications with the root node with each of those extenders communicating with the root node via one or more intermediate extenders.

Although the present disclosure has been described in the context of WiFi mesh networks, the skilled in the art will understand that the present disclosure can be implemented in the context of other wireless networks.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence. Likewise, additional steps may be included in such methods, and certain steps may be omitted or combined, in methods consistent with various embodiments of the disclosure.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure. For example, a relatively thin layer of adhesive or other suitable binder can be used to implement such "direct attachment" of the two corresponding components in such physical structure.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The functions of the various elements shown in the figures, including any functional blocks labeled as "processors" and/or "controllers," may be provided through the use of dedicated hardware as well as hardware capable of executing software in association with appropriate software. Upon being provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As will be appreciated by one of ordinary skill in the art, the present disclosure may be embodied as an apparatus (including, for example, a system, a network, a machine, a device, a computer program product, and/or the like), as a method (including, for example, a business process, a computer-implemented process, and/or the like), or as any combination of the foregoing. Accordingly, embodiments of the present disclosure may take the form of an entirely software-based embodiment (including firmware, resident software, micro-code, and the like), an entirely hardware embodiment, or an embodiment combining software and hardware aspects that may generally be referred to herein as a "system" or "network".

Embodiments of the disclosure can be manifest in the form of methods and apparatuses for practicing those methods. Embodiments of the disclosure can also be manifest in the form of program code embodied in tangible media, such as magnetic recording media, optical recording media, solid state memory, floppy diskettes, CD-ROMs, hard drives, or any other non-transitory machine-readable storage medium, wherein, upon the program code being loaded into and executed by a machine, such as a computer, the machine becomes an apparatus for practicing the disclosure. Embodiments of the disclosure can also be manifest in the form of program code, for example, stored in a non-transitory machine-readable storage medium including being loaded into and/or executed by a machine, wherein, upon the program code being loaded into and executed by a machine, such as a computer, the machine becomes an apparatus for practicing the disclosure. Upon being implemented on a general-purpose processor, the program code segments combine with the processor to provide a unique device that operates analogously to specific logic circuits.

The term "non-transitory," as used herein, is a limitation of the medium itself (i.e., tangible, not a signal) as opposed to a limitation on data storage persistency (e.g., RAM vs. ROM).

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the phrases "at least one of A and B" and "at least one of A or B" are both to be interpreted to have the same meaning, encompassing the following three possibilities: 1- only A; 2- only B; 3- both A and B.

The embodiments covered by the claims in this application are limited to embodiments that (1) are enabled by this specification and (2) correspond to statutory subject matter. Non-enabled embodiments and embodiments that correspond to non-statutory subject matter are explicitly disclaimed even if they fall within the scope of the claims.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

While preferred embodiments of the disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the technology of the disclosure. It is intended that the following claims define the scope of the invention and that methods and structures within the scope of these claims and their equivalents be covered thereby.

## Claims

1. A method for operating a wireless network comprising a root node and one or more existing extenders configured to communicate with the root node, wherein the root node has (i) a list of authorized extenders and (ii) a network address, the method comprising:
updating, at the root node, the list of authorized extenders to exclude an existing extender; and
causing the network address of the root node to be changed.

2. The method of claim 1, wherein a configuration server for the wireless network performs the method of claim 1.

3. The method of claim 2, wherein the configuration server provides a new network address to the root node.

4. The method of claim 2, wherein the configuration server instructs the root node to select a new network address for the root node.

5. A configuration server for a wireless network comprising a root node and one or more existing extenders configured to communicate with the root node, wherein the root node has (i) a list of authorized extenders and (ii) a network address, the configuration server comprising:
at least one processor; and
at least one memory storing instructions that, upon being executed by the at least one processor, cause the configuration server at least to:
update, at the root node, the list of authorized extenders to exclude an existing extender; and
cause the network address of the root node to be changed.

6. The configuration server of claim 5, wherein the configuration server is configured to provide a new network address to the root node.

7. The configuration server of claim 5, wherein the configuration server is configured to instruct the root node to select a new network address for the root node.

8. A computer program comprising instructions which, when executed by a configuration server for a wireless network where the wireless network comprises a root node and one or more existing extenders configured to communicate with the root node, wherein the root node has (i) a list of authorized extenders and (ii) a network address, cause the configuration server to perform at least:
updating, at the root node, the list of authorized extenders to exclude an existing extender; and
causing the network address of the root node to be changed

9. A method for a wireless network comprising a root node and one or more existing extenders configured to communicate with the root node, wherein the root node has (i) a list of authorized extenders and (ii) a network address, the method comprising:
the list of authorized extenders being updated to exclude an existing extender;
the network address of the root node being changed to a new network address;
for an extender on the updated list of authorized extenders:
the extender transmitting an on-boarding probe request to the root node;
the root node determining that the extender is on the list and transmitting, to the extender, an on-boarding probe reply containing the root node's new network address; and
the extender communicating with the root node using the new network address; and for the excluded extender:
the excluded extender transmitting an on-boarding probe request to the root node;
the root node determining that the excluded extender is not on the list; and
the root node terminating the on-boarding process without transmitting a probe reply containing the root node's new network address to the excluded extender.

10. The method of claim 9, wherein the root node receives the new network address.

11. The method of claim 9, wherein the root node selects the new network address.

12. A root node for a wireless network further comprising one or more existing extenders configured to communicate with the root node, wherein the root node has (i) a list of authorized extenders and (ii) a network address, the root node comprising:
at least one processor; and
at least one memory storing instructions that, upon being executed by the at least one processor, cause the root node at least to:
store an updated list of authorized extenders that excludes an existing extender of the one or more extenders;
receive an instruction to change the network address of the root node;
change the network address of the root node;
for an extender on the updated list of authorized extenders:
receive an on-boarding probe request from the extender;
determine that the extender is on the list and transmit, to the extender, an on-boarding probe reply containing the root node's new network address; and
communicate with the extender using the new network address; and
for the excluded extender:
receive an on-boarding probe request from the excluded extender;
determine that the excluded extender is not on the list; and
terminate the on-boarding process without transmitting a probe reply containing the root node's new network address to the excluded extender.

13. A computer program comprising instructions which, when executed by a root node for a wireless network where the wireless network comprises the root node and one or more existing extenders configured to communicate with the root node, wherein the root node has (i) a list of authorized extenders and (ii) a network address, cause the root node to perform at least:
the list of authorized extenders being updated to exclude an existing extender;
the network address of the root node being changed to a new network address;
for an extender on the updated list of authorized extenders:
the extender transmitting an on-boarding probe request to the root node;
the root node determining that the extender is on the list and transmitting, to the extender, an on-boarding probe reply containing the root node's new network address; and
the extender communicating with the root node using the new network address; and
for the excluded extender:
the excluded extender transmitting an on-boarding probe request to the root node;
the root node determining that the excluded extender is not on the list; and
the root node terminating the on-boarding process without transmitting a probe reply containing the root node's new network address to the excluded extender.
